**Europäisches Patentamt**

**European Patent Office**

**Office européen des brevets**

(19)

(11) **EP 1 574 301 A2**

(12) **EUROPÄISCHE PATENTANMELDUNG**

(43) Veröffentlichungstag:
**14.09.2005 Patentblatt 2005/37**

(51) Int Cl.$^7$: **B25J 9/16**

(21) Anmeldenummer: **05450038.4**

(22) Anmeldetag: **03.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **11.03.2004 AT 4272004**

(71) Anmelder: **Incal, Ferhat**
**1030 Wien (AT)**

(72) Erfinder: **Incal, Ferhat**
**1030 Wien (AT)**

(74) Vertreter: **Sonn & Partner Patentanwälte**
**Riemergasse 14**
**1010 Wien (AT)**

(54) **Verfahren und System zum Positionieren eines verfahrbaren schweren Manipulators**

(57) Verfahren und System zum Positionieren eines verfahrbaren schweren Manipulators (6) in einer Arbeitsposition (A), wobei beim Verfahren des Manipulators (6) in Richtung Arbeitsposition (A) eine in einem vorgegebenen Abstand vor der Arbeitsposition (A) liegende Vor-Position (V) des Manipulators (6) erfasst und von dieser Vor-Position (V) weg die Bewegung des Manipulators (6) bis zum Stillstand in der Arbeitsposition (A) in einem offenen Steuerkreis gesteuert wird.

FIG. 8

EP 1 574 301 A2

## Beschreibung

Die Erfindung betrifft ein Verfahren sowie ein System zum Positionieren eines längs einer Führungsbahn verfahrbaren schweren, mit einem Antrieb versehenen Manipulators in einer Arbeitsposition.

Zur Kommandosteuerung von Gelenk-Robotern bzw. -Manipulatoren sind bereits verschiedene, zum Teil sehr aufwendige Verfahren vorgeschlagen worden, vgl. beispielsweise DE 198 00 552 A1 oder US 5 952 796 A, wobei auch eine Optimierung hinsichtlich verschiedener Kriterien, wie Energie, vorgesehen ist.

Die Positionierung von schweren Manipulatoren wird im Hinblick auf die erforderliche Positionierungsgenauigkeit herkömmlicherweise unter ständiger Rückkopplung von Positionsdaten in einem geschlossenen Regelkreis durchgeführt. Dies Positionierungstechnik ist an sich bewährt und bei den meisten Anwendungen problemlos anwendbar. Es gibt jedoch Anwendungsbereiche, wie etwa im Fall der Positionierung von Manipulatoren in Galvanisierungs- oder Gießanlagen, wo eine derartige Regelung zur Positionierung problematisch wird, und zwar aufgrund der Umgebungsbedingungen, die die Positionsgeber in ihrer Funktion beeinträchtigen und zerstören. Es müssen daher in relativ kurzen Zeitabständen die Positionsgeber überprüft und erneuert werden, d.h. zufolge der gegebenen Umgebung, mit feuchten Bereichen oder Nassbereichen, mit Säurenebeln, mit extremer Hitze, ist die herkömmliche Regelungstechnik sehr Service-anfällig.

Aufgabe der Erfindung ist es daher, hier Abhilfe zu schaffen, und eine verbesserte Positionierungstechnik vorzusehen, die sich durch eine hohe Wirtschaftlichkeit und Robustheit auszeichnet.

Zur Lösung dieser Aufgabe sieht die Erfindung ein Verfahren sowie ein System wie in den unabhängigen Ansprüchen definiert vor. Vorteilhafte Ausführungsformen und Weiterbildungen sind in den Unteransprüchen angegeben.

Erfindungsgemäß wird somit eine Positionssteuerung ohne ständige Rückkopplung von Positionsdaten vorgesehen, wobei für den letzten Streckenteil beim Verfahren des Manipulators bis zum Stillstand in der erforderlichen Arbeitsposition eine vorgegebene Bewegungssteuerung vorgesehen wird; dieser letzte Streckenteil wird durch eine vorgegebene Vor-Position, in einem vorgegebenen Abstand vor der Arbeitsposition festgelegt, wobei beispielsweise im Fall eines Manipulators für eine Galvanisierungsanlage, die eine Mehrzahl von Galvanisierungsbecken in einer Linie hintereinander aufweist, ein Abstand von 0,5 m gewählt werden kann. In der Vor-Position hat der Manipulator bevorzugt eine vorgegebene Geschwindigkeit $v_0$, von der weg er bis zum Stillstand in der Arbeitsposition abgebremst werden muss. Dies könnte an sich theoretisch durch allmähliches Reduzieren der Antriebsleistung, d.h. des Antriebsmoments, auf 0 erfolgen, bevorzugt wird jedoch gemäß einer Steuerkurve gesteuert, die bezüglich Antriebsleistung oder Antriebsmoment auch in den negativen Bereich geht und dort einen Umkehrpunkt hat, was im Fall einer Bewegung des Manipulators auf Rollen in einer Führungsbahn beispielsweise dazu führt, dass die Rollen oder Räder von ihrem Drehantrieb her zunächst noch mit einem positiven, allmählich sinkenden Drehmoment angetrieben werden können, wobei schließlich - nach einem Nulldurchgang - ein negatives Drehmoment (also ein Bremsmoment) angelegt wird, welches nach Erreichen eines unteren Extremwerts auf 0 gesteuert wird. Denkbar ist es jedoch auch, die Steuerkurve so vorzusehen, dass nach Durchlaufen des negativen Bereichs wieder das Drehmoment oder allgemein die Antriebsleistung in den positiven Bereich gesteuert und von dort über einen weiteren oberen Extremwert allmählich auf 0 gebracht wird. Die Steuerkurve kann dabei bevorzugt durch ein Polynom 3. oder 4. Grades angenähert werden, wobei die Koeffizienten des jeweiligen Polynoms vorab empirisch ermittelt werden können. Im Zuge dieser empirischen Ermittlung kann beispielsweise eine Methode der linearen Regression für die Berechnung der Koeffizienten angewandt werden.

In der Steuerung kann in vorteilhafter Weise die Reibung zwischen den Rollen des Manipulators und deren Laufflächen oder Schienenflächen berücksichtigt werden, wobei es hierfür zweckmäßig ist, eine Materialpaarung (Material des Rollenmantels und Material der Laufschiene) zu finden, die einen Reibungskoeffizienten ergibt, der - auch wenn er nicht linear von der Geschwindigkeit abhängt oder überhaupt konstant ist, so doch mit Hilfe eines mathematischen Modells gut angenähert werden kann. Bevorzugte Materialpaarungen hierfür sind: Polyurethan (PU) oder aber, bei besonders schweren Manipulatoren (beispielsweise bei einer Masse über 2000 kg), Castamide für den Rollenmantel oder die Rolle; sowie als Material für die Schienenfläche oder Lauffläche: Polyvinylidenfluorid (PVDF). Als vorteilhaft hinsichtlich der Modellierung des Reibungskoeffizienten hat es sich hierbei auch erwiesen, wenn die Schienenflächen zumindest im Bereich zwischen der Vor-Position und der Arbeits-Position erhitzt werden, und zwar insbesondere auf eine Temperatur zwischen 65°C und 80°C, vorzugsweise auf ca. 75°C. Dabei hat sich gezeigt, dass die Reibungseigenschaften vergleichmäßigt werden, ohne dass das PVDF-Material seine Festigkeit ändert.

Die Vor-Position ist durch einen Positionsgeber definiert, wobei somit nur ein einzelner Positionsgeber pro Arbeitsposition - zur Auslösung der Positionssteuerung - vorgesehen bzw. notwendig ist. Dieser Positionsgeber ist in Abstand von der besonders kritischen Umgebung angeordnet und kann auch robust ausgeführt sein, etwa in Form eines Metallteiles an der Führungsbahn, dem am beweglichen Teil des Manipulators ein Resonanzschaltkreis zugeordnet wird.

Der Steuerkreis kann zur Drehmoment-Steuerung einen Drehmoment-Umrichter aufweisen, der von einer Steuereinheit, etwa einem Mikro-Controller, entsprechende Steuerbefehle zugeführt erhält und auf Basis hievon den insbesondere elektrischen Antrieb der Rollen (allgemein zumindest einer Rolle) ansteuert, um das jeweilige Drehmoment - positiv bzw. negativ - durch den ElektroAntrieb zu bewirken.

Die Erfindung wird nachfolgend anhand von bevorzugten Ausführungsbeispielen, auf die sie jedoch nicht beschränkt sein soll, und unter Bezugnahme auf die Zeichnung noch weiter erläutert. In der Zeichnung zeigen im Einzelnen:

Fig. 1 eine schematische schaubildliche Darstellung eines Manipulators für eine Galvanisierungsanlage, wobei einige Galvanisierungsbecken hintereinander und nebeneinander beispielhaft gezeigt sind;

Fig. 2 eine Stirnansicht eines derartigen Manipulators in Zuordnung zu zwei nebeneinander angeordneten Galvanisierungsbecken in einer ebenfalls schematisierten Darstellung;

Fig. 3 eine schematische Draufsicht auf einen solchen Manipulator in Zuordnung zu Galvanisierungsbecken einer Galvanisierungsanlage;

Fig. 4 in einer schaubildlichen Darstellung den Bereich von Rollen des Manipulators, die in einer Führungsschiene eines stationären Gestells im Bereich der Galvanisierungsanlage abrollen;

Fig. 5 in einer ähnlichen schaubildlichen Darstellung, jedoch in größerem Maßstab, eine solche Rolle des Manipulators zwischen zwei Lagerteilen und in Zuordnung zu einer Führungsschiene;

Fig. 6 ein Schema der Antriebseinrichtung eines Manipulators wie in Fig. 1 bis 5 gezeigt, in Zuordnung zu zwei Rollen, einer linken und einer rechten Rolle, mit entsprechenden Wälzlagern für die durchgehende Welle der Antriebseinrichtung, wobei schematisch im Querschnitt auch die Führungsschienen für die Rollen gezeigt sind;

Fig. 7 in einer schematischen Seitenansicht eine Rolle mit einem Rollenmantel aus einem spezifischen Kunststoffmaterial in Zuordnung zu einer Lauffläche einer Führungsschiene, ebenfalls mit einem spezifischen Kunststoffmaterial;

Fig. 8 schematisch eine Ausführungsform des offenen Antriebs-Steuerkreises in Form eines Blockschaltbildes;

die Fig. 9A und 9B verschiedene Diagramme für den Reibungskoeffizienten $\mu$ in Abhängigkeit von der jeweiligen Manipulatorgeschwindigkeit v; und

die Fig. 10 und 11 zwei mögliche Steuerkurven für die Steuerung der Bewegung des Manipulators von einer Vor-Position ausgehend, wo eine bestimmte Geschwindigkeit des Manipulators gegeben ist, bis zum Stillstand in der Arbeitsposition.

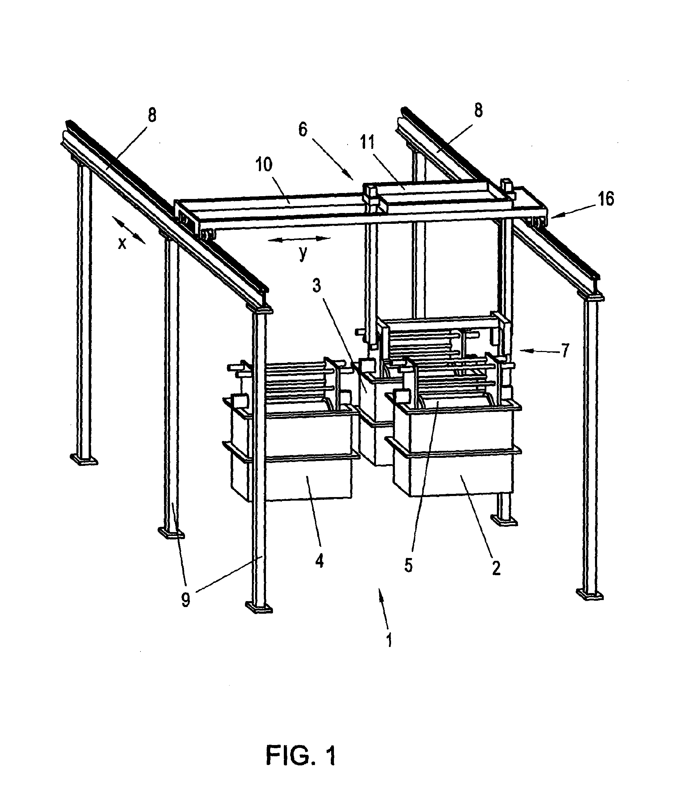

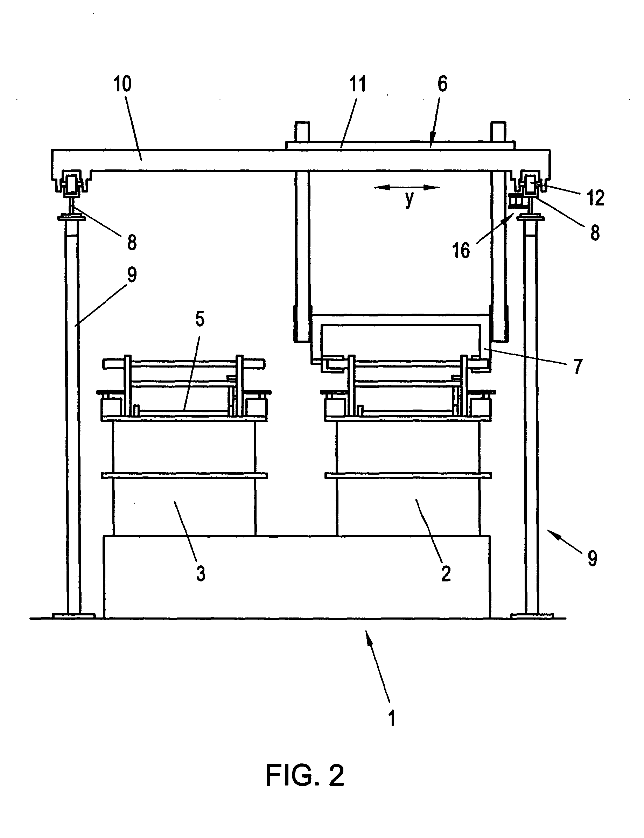

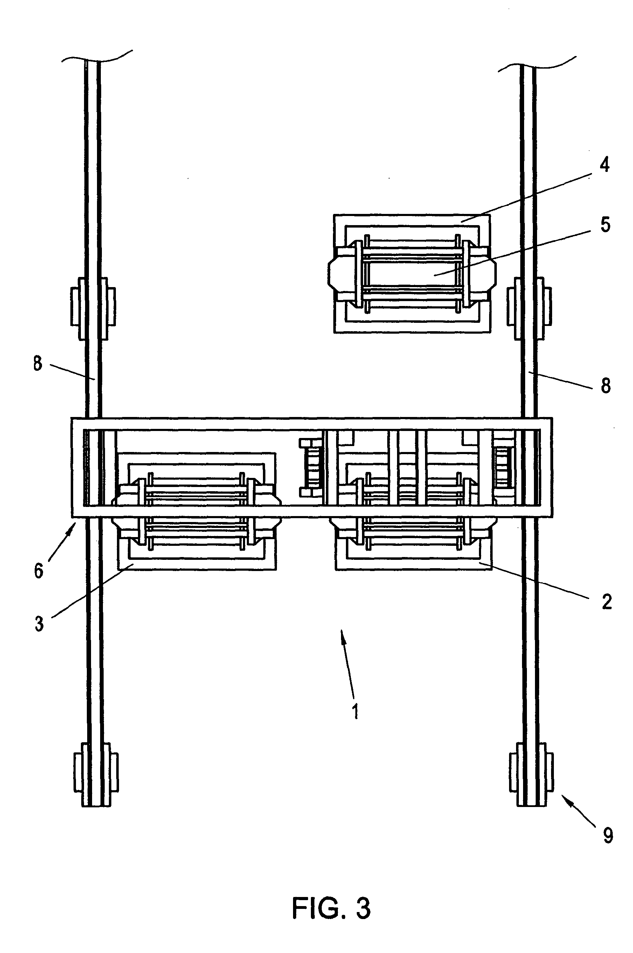

In den Fig. 1 bis 3 ist eine Galvanisierungsanlage 1 mit beispielhaft dargestellten einzelnen Galvanisierungsbecken 2, 3 und 4 gezeigt, in denen Werkstücke, die in Trommeln 5 enthalten sind, galvanisch behandelt, beispielsweise metallisiert werden. Die Trommeln 5 werden mit Hilfe eines Manipulators 6 in die einzelnen Galvanisierungsbecken 2, 3, 4 etc. abgesenkt bzw. aus diesen heraus gehoben und zu diesem Zweck enthält der Manipulator 6 in herkömmlicher Weise entsprechende, in Fig. 1 und 2 nur ganz allgemein angegebene Greifeinrichtungen 7.

Der eigentliche Manipulator 6 ist entlang von eine x-Richtung definierenden Führungsschienen 8, 8 verfahrbar, die an einem stationären Gestell 9 befestigt sind, und die einen Querträger 10 in Richtung der Linie der Galvanisationsanlage 1, also in x-Richtung, verfahrbar abstützen. Der Querträger 10 als in x-Richtung verfahrbarer Teil des Manipulators 6 trägt eine Art Laufkatze oder Schlitten 11, der längs des Querträgers 10 - in y-Richtung - verfahrbar ist. Somit ist eine Portalkran-artige Anordnung für den Manipulator 6 vorgesehen, wobei v.a. das Problem der genauen Positionierung in x-Richtung gegeben ist. Diese genaue Positionierung in x-Richtung ist erforderlich, damit die jeweilige Trommel 5 genau in das gewünschte Galvanisierungsbecken 2 etc. abgesenkt werden kann, ohne dass gegen Einrichtungen am Galvanisierungsbecken 2 etc., wie etwa Stromzuführungen, Abschirmungen etc., gestoßen wird. Dabei ist zu berücksichtigen, dass die Trommel 5 in Draufsicht häufig nur wenig kleiner als der Grundriss des Galvanisierungsbeckens ist. Ebenfalls kritisch ist die genaue Positionierung des Manipulators 6 v.a. in x-Richtung beim Erfassen und Herausheben einer solchen Trommel 5 aus einem Galvanisierungsbecken 2.

Die genaue Positionierung ist deshalb problematisch, da die zu bewegende Masse in der Größenordnung von 600 kg (ohne Trommel-Last) bis zu 2500 kg (mit Trommel 5) betragen kann. Die Positioniergenauigkeit soll dabei $\pm$ 1 mm betragen, wobei die Geschwindigkeit des Manipulators 6 in x-Richtung beispielsweise 300 mm/s betragen kann. Denkbar sind jedoch auch Geschwindigkeiten in der Größenordnung von 40 m/min, was einer Geschwindigkeit von ca. 0,7 m/s entspricht.

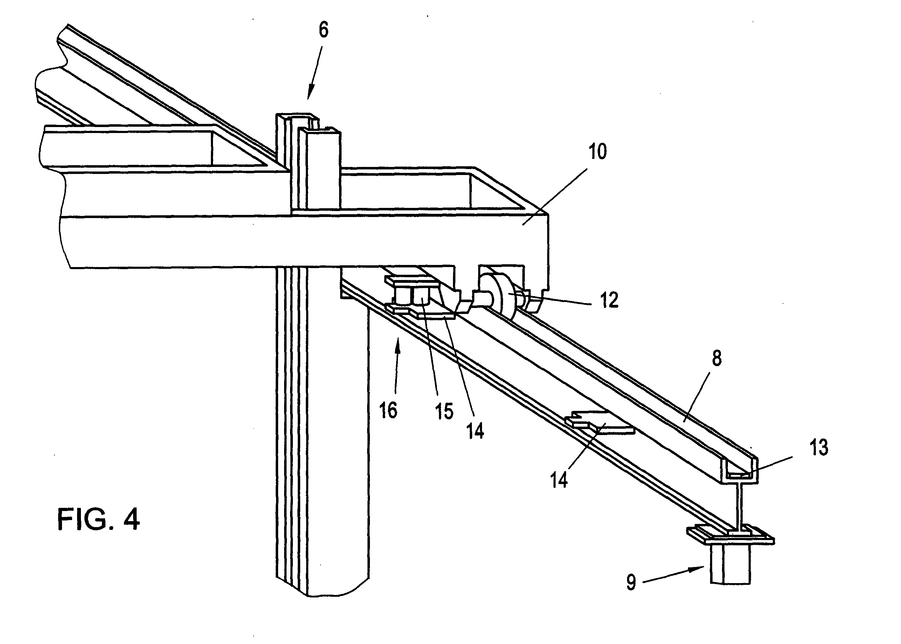

Der Manipulator 6, d.h. genauer der Querträger 10, läuft mit Rollen 12 in den Führungsschienen 8, die beispielsweise einen eigenen Laufflächenbelag 13 aufweisen, vgl. Fig. 4.

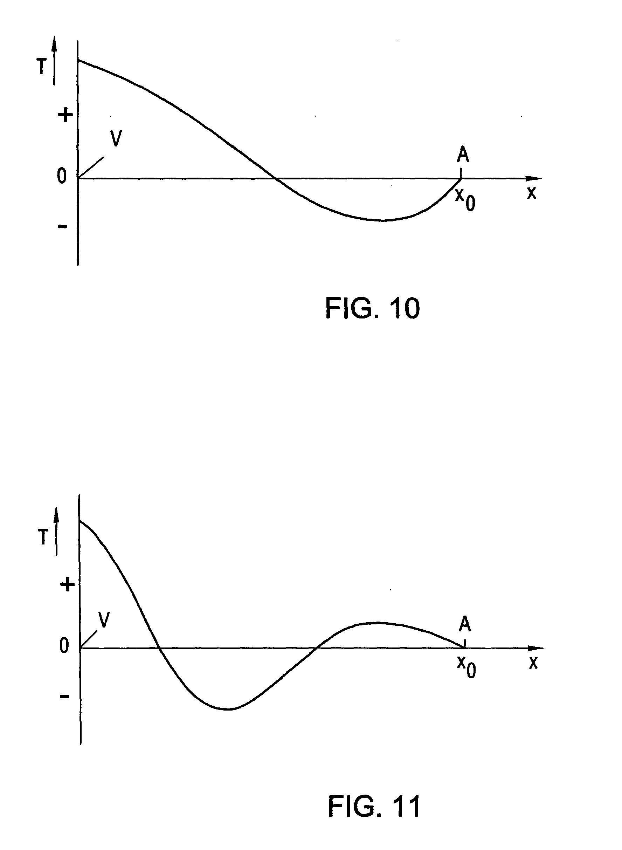

Wie insbesondere aus Fig. 4 ersichtlich ist, sind an den Führungsschienen 8 in Zuordnung zu den einzelnen Galvanisationsbecken 2 etc. robuste magnetische Metallteile 14 vorgesehen, die mit einem Resonanzkreis 15 am Querträger 10 zur Bildung eines Positionsgebers 16 zusammenwirken. Durch diesen Positionsgeber 16 wird jeweils, in Fahrtrichtung des Manipulators 6 gesehen, in einem bestimmten Abstand $x_0$ vor der eigentlichen Arbeitsposition A unmittelbar über dem jeweiligen Galvanisationsbecken 2 eine Vor-Position V definiert, wobei diese Vor-Position V ebenso wie die Arbeits-Position A in den Fig. 10 und 11 angegeben ist. Der Abstand $x_0$ zwischen der Vor-Position V und der Arbeits- oder Ziel-Position A kann beispielsweise 500 mm betragen. Die nachstehend noch näher zu beschreibende Positionssteuerung erfolgt in diesem Bereich, d.h. auf dieser Strecke entsprechend dem Abstand $x_0$ zwischen der Vor-Position V und der Arbeits- oder Ziel-Position A.

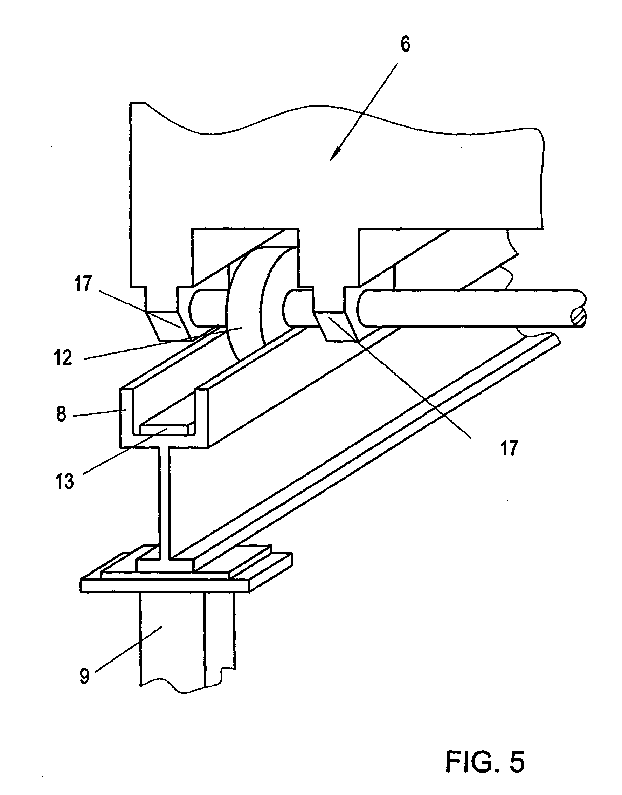

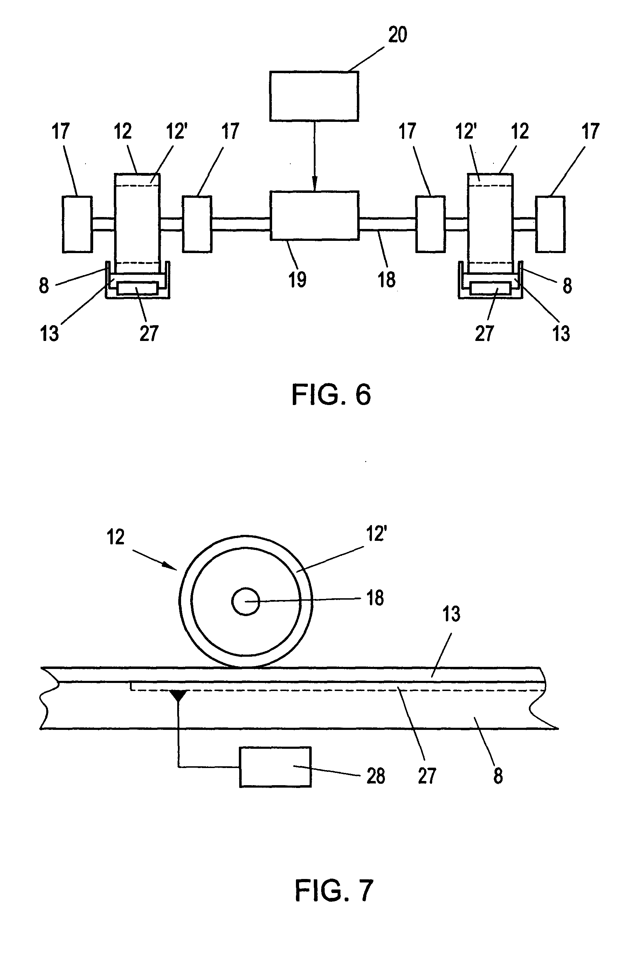

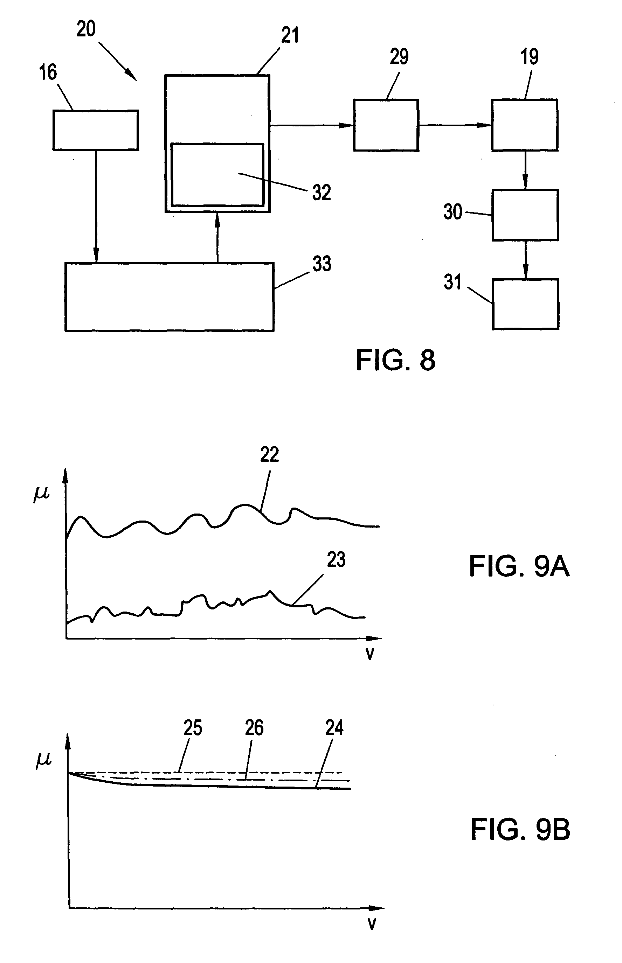

Aus Fig. 5 ist die Anordnung und Führung einer Rolle 12 des Manipulators 6 in einer Führungsschiene 13, die beispielsweise im Querschnitt U-förmig ausgebildet ist, näher ersichtlich. Dabei sind auch zwei Lagerteile 17, 17 mit nicht näher ersichtlichen Wälzlagern, insbesondere Kugellagern, beidseits der Rolle 12 dargestellt. Im Bereich der anderen Führungsschiene 13 ist eine ähnliche Anordnung von Rolle 12 und Lagerteilen 17, 17 vorgesehen, wie dies schematisch am besten aus Fig. 6 hervorgeht. Die Lagerteile 17 lagern eine durchgehende Welle 18, die von einem Antrieb 19, bevorzugt in Form eines Elektromotors, angetrieben wird, vgl. Fig. 6. Dem Antrieb 19 ist ein offener Steuerkreis 20 zugeordnet, der nachstehend noch näher anhand insbesondere der Fig. 8 erläutert werden wird.

In Fig. 6 sind auch schematisch die Führungsschienen 8 mit den Laufflächen-Belägen 13 veranschaulicht, und weiters ist angedeutet, dass die Rollen 12 einen Rollenmantel 12' aufweisen, der aus einem speziellen Kunststoffmaterial besteht, das im Zusammenwirken mit dem Laufflächen-Belag 13 einen Reibungskoeffizenten μ ergibt, der zwar abhängig von der Bewegungsgeschwindigkeit v des Manipulators 6, d.h. von der Rollgeschwindigkeit der Rollen 12 entlang den Führungsschienen 8, abhängt, jedoch trotz dieser Variabilität mathematisch modellierbar ist, so dass der Reibungskoeffizient μ bei der Positioniersteuerung trotz des offenen Steuerkreises, d.h. ohne laufenden Rückkopplungs-Positionswerte, aufgrund der Beherrschbarkeit der Reibungsverhältnisse möglich ist.

Um die Verhältnisse und die hohen Anforderungen bezüglich einer Positionssteuerung (ohne laufende Rückkopplung) bei der x-Bewegung des Manipulators 6 zu verdeutlichen, können die nachfolgenden mathematischen Beziehungen betrachtet werden. Dabei bedeuten die einzelnen Größen folgendes:

$F_{Umrichter}$ :     Antriebskraft, die von einem Umrichter 21 des Steuerkreises 20 (s. Fig. 8) bewirkt wird

$F_{Reibung}$ :     Reibungskraft in Bewegungsrichtung

$μ_{Flächen}$ :     Reibungskoeffizient zwischen den Flächen 12' und 13

$m_{Manipulator}$ :     Masse des Manipulators 6

$g_{Umgebung}$ :     Erdbeschleunigung der Umgebung

$a_{Manipulator}$ :     Beschleunigung des Manipulators 6

$v$:     Geschwindigkeit des Manipulators

$L$:     Fahrweg nach Erhalt des Positionierungsbefehls (soll gleich $x_0$ sein)

Es gilt:

$$F_{Reibung} = μ_{Flächen} \times m_{Manipulator} \times g_{Umeghung} \tag{F1}$$

$$F_{Umrichler} - F_{Reibung} = m_{Manipulator} \times a_{Manipulaor} \tag{F2}$$

$$L = \int\limits_{0}^{t}\int\limits_{v_0}^{0} \frac{(F_{Umrichter} - F_{Reibung})}{m_{Manipulator}}\, dv\, dt \qquad (F3)$$

Wenn die Gleichungen F1 und F2 in F3 eingesetzt werden, ergibt sich:

$$L = \int\limits_{0}^{t}\int\limits_{v_0}^{0} \frac{(F_{Umrichter} - \mu \times m_{Manipulator} \times g_{Umgebung})}{m_{Manipulator}}\, dv\, dt \qquad (F4).$$

Bei Trennung der Gleichung F4 erhält man dann:

$$L = \int\limits_{0}^{t}\int\limits_{v_0}^{0} \frac{F_{Umrichter}}{m_{Manipulator}}\, dv\, dt - \int\limits_{0}^{t}\int\limits_{v_0}^{0} \mu_{Flächen} \times g_{Umgebung}\, dv\, dt \qquad (F5).$$

Es ist zu beachten, dass der erste Teil von F5 ohne großen Aufwand für längere Bremswege durch abschätzbare Parameter berechnet werden kann.

Der zweite Teil enthält allerdings nicht leicht abschätzbare Größen. Die Reibung μ zwischen zwei Berührungsflächen (im vorliegenden Fall zwischen dem Antriebsrad 12 und dem Boden 13 des Führungskanals 8) kann durch eine reine Berechnung nicht abgeschätzt werden. Die Erdbeschleunigung g kann auch für Anwendungen außerhalb der Erde eine Bedeutung haben. Da die vorgeschlagene Technik prinzipiell den Teil (μ.g) (Multiplikation des Reibungskoeffizienten mit der Erdbeschleunigung) aufheben kann, kann diese Methode zukünftig vielfältige Möglichkeiten anbieten, um Positionierungsaufgaben in außergewöhnlichen Erdbeschleunigungsfällen einfacher zu lösen.

Um im zweiten Term der Gleichung F5 die Reibungsverhältnisse besser beherrschen zu können, sind bevorzugt Materialien für den Rollenmantel 12' und für den Laufflächenbelag 13, nachstehend kurz die Lauffläche 13, zu wählen, die - wie bereits vorstehend angedeutet - eine möglichst lineare oder konstante Form des Reibungskoeffizienten bei variabler Geschwindigkeit ergeben. Um dies näher zu erläutern, wird auf die Figur 9A und 9B Bezug genommen, in denen jeweils der Verlauf des Reibungskoeffizienten μ über der Geschwindigkeit v für verschiedene Materialien bzw. Materialpaare angegeben ist. In Fig. 9A sind dabei eher ungeeignete oder nur schwer zu beherrschende Reibungskoeffizienten μ gezeigt, und zwar mit einer Kurve 22 für den Fall einer vergleichsweise hohen Reibung und mit einer Kurve 23 für den Fall einer vergleichsweise geringen Reibung zwischen den betroffenen Materialien der Komponenten 12' und 13.

Es ist jedoch möglich, durch Versuche mit verschiedensten Kunststoffmaterialien zu Materialpaarungen zu gelangen, die einen relativ gut angenähert linearen Verlauf des Reibungskoeffizienten μ über der Geschwindigkeit v ergeben, wobei bevorzugt ein konstanter Wert μ über die hier interessierenden Geschwindigkeiten herauszufinden wäre. Dies ist in Fig. 9B mit den Kurven 24 bzw. - strichliert für den Fall eines konstanten Reibungskoeffizienten μ - mit der Kurve 25 gezeigt.

Eine diesbezüglich ausgezeichnete Materialpaarung ergibt sich, wenn der Laufflächen-Belag 13, also der Boden der U-förmigen Führungsschienen 8, aus PVDF (Polyvinylidenefluorid) besteht, und wenn zumindest die Mantelfläche 12' der Rollen oder Räder 12 aus PU (Polyurethan) oder aus Castamide (letzteres für Massen über 2000 kg) besteht. Castamide ist ein durch Gießen hergestelltes Nylonprodukt, konkret Nylon66. Dieses Polyamid-Nylon66, d. h. Castamide, hat einen sehr hohen mechanischen Widerstand und wird unter anderem auch zur Herstellung von leichten, geräuscharmen Zahnrädern verwendet. Im Falle einer mechanischen Belastung kommt es kaum zu einer Deformation oder einem elastischen Nachgeben an der Oberfläche.

Für die vorstehend angegebenen Materialpaarungen ergibt sich ein Reibungskoeffizient μ mittlerer Größe, der wie aus Fig. 9B ersichtlich ist, mit steigender Geschwindigkeit - vergleiche die Kurve 24 - relativ langsam absinkt und dabei einen nur geringfügig von der Linearität abweichenden Verlauf hat.

Überraschend hat sich auch gezeigt, dass im Fall einer Erwärmung des Laufflächen-Belages 13 aus PVDF eine zusätzliche Verbesserung, nämlich Vergleichmäßigung, der Reibungsverhältnisse erzielbar ist, wobei der sich ergebende Reibungskoeffizient μ in Abhängigkeit von der Geschwindigkeit v in Fig. 9B mit der strich-punktierten Kurve 26 angedeutet ist.

In Fig. 6 und 7 sind dementsprechend unterhalb der Laufflächen 13 in den Führungsschienen 8 Heizeinrichtungen 27, beispielsweise in Form eines elektrischen Heizstabes oder einer streifenförmigen elektrischen Heizmatte, angebracht. Diese Heizeinrichtung 27 wird von einer elektrischen Spannungsquelle 28 (s. Fig. 7) mit elektrischer Energie versorgt. Durch eine Aufheizung der Lauffläche 13 auf eine Temperatur von z.B. 65°C bis 75°C, allgemeiner 60°C bis 80°C, wird eine Vergleichmäßigung der Reibungseigenschaften erzielt, wie unmittelbar aus Fig. 9B, Kurve 26, ersichtlich ist, wobei aber die Festigkeit der Lauffläche 13 nicht verändert wird.

Für die Positionsierungssteuerung hat sich weiters eine spezielle Steuerung der Antriebsleistung, hier konkret des Drehmoments des Antriebs 19, als günstig erwiesen. Dies wird nunmehr anhand der Figuren 8, 10 und 11 näher erläutert. Vorausgeschickt sei, dass der Antrieb 19 bevorzugt durch einen Elektromotor, insbesondere einen Synchronmotor mit einem Samariumkern oder mit Seltenerd-Magneten, realisiert wird. Auch Asynchronmotoren (Induktionsmotoren) können mit guten Ergebnissen eingesetzt werden, wobei es insbesondere zweckmäßig ist, eine relativ hohe Polanzahl und eine niedrige Spannung für die Statorwicklung zu wählen.

Wie bereits vorstehend in Zusammenhang mit Fig. 6 erläutert, ist dem Antrieb 19, insbesondere also einem Synchronmotor oder Asynchronmotor, ein offener Steuerkreis 20 zugeordnet, und dieser Steuerkreis 20 enthält gemäß Fig. 8 einen Drehmoment-Umrichter 21, der über einen Leistungs-Treiber 29 den Antrieb, nämlich den Elektromotor 19, zur Abgabe der Drehantriebsleistung mit dem entsprechenden Drehmoment ansteuert. Der Antrieb 19 treibt dann beispielsweise direkt oder aber gegebenenfalls über ein Getriebe 30 die Rollen oder Räder 12 an, so dass sich eine durch Reibung definierte Abrollbewegung in den Führungsschienen 8 ergibt, was in Fig. 8 mit dem Block 31 veranschaulicht ist.

Dem Umrichter 21 ist ein Speicher 32 für die jeweilige Drehmoment-Steuerkurve zugeordnet, und eine allgemeine Steuereinheit 33, die beispielsweise durch einen Mikrokontroller realisiert sein kann, dient zur Zuführung bzw. Abspeicherung der Steuerkurven-Daten bzw. zur Ansteuerung des Umrichters 21. Die Steuereinheit 33 ist mit einem Eingang mit dem Positionsgeber 16 verbunden, wobei das jeweilige Ausgangssignal des Positionsgebers 16, wenn der magnetische Metallteil 14 vom Resonanzkreis 15 passiert wird, als Stoppbefehl der Steuereinheit 33 übermittelt wird. Von diesem Zeitpunkt an - der in der x-Achse der Vor-Position V in den Figuren 10 und 11 entspricht - beginnt die Positionierungssteuerung, um den Manipulator 6 in geeigneter Weise zu verlangsamen und in der Zielposition, der Arbeitsposition A, Millimeter-genau anzuhalten.

Dabei hat sich ein Steuerkurvenverlauf als vorteilhaft erwiesen, der ausgehend von einem positiven Drehmoment T in der Vor-Position V, wobei dort der Manipulator 6 eine vorgegebene Geschwindigkeit von $v_0$ hat, in einen Bereich mit negativem Drehmoment T (Bremsmoment) übergeht, wobei ein unterer Extremwert U definiert ist. Von diesem Zeitpunkt an steigt das - negative - Drehmoment T wieder an, bis es beispielsweise - s. Fig. 10 - den Wert 0 zum Zeitpunkt des Erreichens der Arbeitsposition A erreicht; es ist aber auch möglich, das Drehmoment T wieder leicht positiv werden zu lassen und ab einem oberen Extremwert wieder abnehmen zu lassen, bis das Drehmoment zum Zeitpunkt A den Wert 0 erreicht, s. Fig. 11. Was die Beispiele für diese Steuerkurven anlangt, die in den Figuren 10 und 11 gezeigt sind, so sei erwähnt, dass auch noch mehr Extremwerte bzw. Nulldurchgänge gegeben sein können. In beiden Diagrammen der Figuren 10 und 11 hat das Drehmoment T in der Vor-Position V beispielhaft einen Wert von 5 Nm.

Mit derartigen Steuerkurven für das Drehmoment T wie vorstehend angegeben, mit einem oder mehreren Drehmoment-Nulldurchgängen, wird eine Anpassung des Verhältnisses von Drehmoment-Nulldurchgängen zur Gesamtbremszeit in Abstimmung auf die eingesetzten Reibungsmaterialien (Räder 12, Laufflächen 13) ermöglicht. Konkret wird dabei ein Reibungsflächen-abhängiges Tastverhältnis der Zeilen mit negativem Drehmoment festgelegt.

Die jeweilige Drehmoment-Funktion, d.h. T-Steuerkurve, kann beispielsweise durch allgemeine Polynome, insbesondere Polynome 3. Grades oder 4. Grades, durch periodische Funktionen oder durch andere angepasste Funktionen hinsichtlich der Materialeigenschaften der Reibungsflächen bestimmt werden.

Als einfaches Beispiel sei ein Polynom 4. Grades für den Bremsvorgang angenommen:

$$p(x) = ax^4 + bx^3 + cx^2 + dx + e \qquad \text{(F6)}$$

Konkret kann bei diesem Polynom eine empirische Bestimmung der Koeffizienten a, b, c, d und e unter Berücksichtigung der eingesetzten Reibungsflächen (beispielsweise PU für die Rollen 12 und PVDF für die Laufflächen 13) erfolgen, wobei sich beispielhaft eine Funktion wie folgt ergibt:

$$0,4667x^4 + 1,5667x^3 - 5,4667x^2 - 1,5667x + 5 \hspace{2cm} \text{(F6')}$$

Wie ersichtlich führt dieses Polynom zu einem Drehmoment-Anfangswert von 5 Nm. Nach beispielsweise 1 Sekunde wird am Antriebsausgang ein Drehmoment von 0 Nm erreicht (Nulldurchgang) (vgl. auch die Steuerkurve gemäß Fig.10), wonach ca. 0,5 Sekunden lang ein monoton absteigendes Drehmoment T zwecks Justierungs"beschleunigung" folgt. Im Anschluss daran führt ein monoton ansteigendes (negatives) Drehmoment bis zum Wert 0 bzw. bis zur Systemfreigabe, wobei zu diesem Zeitpunkt - dem Stillstand in der Arbeitsposition A - auch eine Feststellbremse aktiviert werden kann, um den Manipulator 6 sicher in dieser Arbeitsposition A festzuhalten. Derartige Fixierungen von Manipulatoren mit Feststellbremsen in der Arbeitsposition sind dann von Vorteil, wenn die Bewegungsachse x nicht eben verläuft, d.h. wenn die Führungsschienen 8 beispielsweise ansteigen oder abfallen.

Bei einem derartigen Drehmomentverlauf wird erreicht, dass die Reibung zwischen den genannten Reibungsflächen eine dominantere Auswirkung hat als zu Beginn des Bremsens bei der Positionierungssteuerung. Bei einer derartigen Steuerung ist die Wiederholungsgenauigkeit der Positionierung besonders gut. Zufolge des Nulldurchganges ist es weiters möglich, die Reibung bei einem flach steigenden und gleichzeitig schwachen Drehmoment wirken zu lassen. Ohne Nulldurchgang würde sich ein steilerer Drehmoment-Verlauf ergeben, und die Reibung würde dann erst in den allerletzten Phasen eine Auswirkung auf das Drehmoment haben können. Dabei ergibt sich jedoch eine weniger gute Wiederholgenauigkeit beim Positionieren.

Wenn $t_N$ als der Zeitpunkt des ersten Drehmoment-Nulldurchganges definiert wird, so ergibt sich

$$T_{material} = \frac{t_N}{t_0} \hspace{2cm} \text{(F7)}$$

, wobei

$T_{Material}$ als ein reibungsflächenabhängiges Verhältnis zwischen dem ersten Drehmoment-Nulldurchgang und der Gesamtablaufzeit ($t_0$) der Steuerung definiert ist (wobei $t_0$ dem vorgegebenen Abstand $x_0$ zwischen V und A entspricht).

Im konkreten Beispiel der Fig. 10 beträgt $T_{Material} = \frac{1}{2} = 0{,}5$.

Weiters wird $T_{Dämpfung}$ als das Verhältnis zwischen dem maximalen Wert des Drehmomentverlaufs nach dem ersten Nulldurchgang und dem betragmäßigen maximalen Wert des Drehmomentverlaufs vor dem ersten Nulldurchgang definiert. Im vorliegenden Beispiel von Fig. 10 beträgt $T_{Dämpfing} = \frac{2}{5} = 0{,}4$.

Für jede Reibungsflächenkombination können optimale Werte $T_{Material}$ und $T_{Dämpfung}$ und eine optimale Funktion mit einem oder mehreren Nulldurchgängen festgelegt werden.

Nach empirischer Zeitjustierung gemäß Fig. 10 kann man Koeffizienten des Polynoms durch nicht-lineare Regression berechnen, wobei sich wie erwähnt aus F6 die konkrete Funktion F(6)' ergibt.

Falls nach der empirischen Vorjustierung eine kompliziertere Drehmoment-Funktion benötigt wird, kann diese Funktion nach Erhalt der Koeffizienten durch nicht-lineare Regression in einem Festspeicher mit einer höheren Auflösung diskret abgetastet und gespeichert werden. Dies erlaubt insbesondere beim Einsatz von digitalen Steuerungssystemen eine einfache Realisierung. Es können z.B. industrieübliche kostengünstige Mikrokontroller für solche Steuerungsaufgaben eingesetzt werden.

Eine komplizierte Drehmoment-Funktion mit mehreren Nulldurchgangs-(Umkehr-)punkten, wie in Fig. 11 gezeigt, kann dann durch einfache kostengünstige Mikrokontroller realisiert werden, wobei die zugrunde liegende Funktion beispielsweise wie folgt angeschrieben werden kann:

$$p(t) = ae^{-t} \cos(bt) \hspace{2cm} \text{(F8).}$$

Konkret wurden im Beispiel der Fig. 11 die Werte der Koeffizienten dieser Funktion (umgeschrieben als T(x)) wie folgt ermittelt:

$$a=5; b=3{,}925.$$

Dabei werden weiters Werte für $T_{material}$ und $T_{dämpfung}$ wie folgt erhalten:

$$T_{Material} = \frac{0,74}{2} = 0,37$$

$$T_{Dämpfung} = \frac{2,31}{5} = 0,462$$

Nach einer nicht-linearen Regressions-Analyse wird die Funktion auf dem folgenden diskreten Datensatz in Form

$$p_i = e^{-T_{Abtast} \times a \times i} \cos(T_{Abtast} \times b \times i) \qquad (F9)$$

abgetastet. Dabei können die Parameter z.B. wie folgt gewählt werden:

Abtastpunkte: $i$: 1..200

Abtastrate: $T_{Abtast}$=10ms

Abtastdauer: $T = T_{Abtast} \times i$

Dies ergibt eine Abtastdauer von 2000ms.

Die vertikale Auflösung der Drehmoment "umkehr" funktion beträgt A=8 bit (1 byte).

Für 200 Abtastwerte benötigt die Steuerkurven-Tabelle insgesamt 200 Byte. Daher kann diese Funktion mit fast allen handelsüblichen 8 bit-Mikrokontrollern in kostengünstigen Preisklassen realisiert werden. Für schnellere Steuervorgänge, die mit einer Abtastrate von 10ms nicht realisiert werden können, kann eine sog. Hashtabelle verwendet werden.

**Patentansprüche**

1. Verfahren zum Positionieren eines verfahrbaren schweren Manipulators (6) in einer Arbeitsposition, **dadurch gekennzeichnet, dass** beim Verfahren des Manipulators (6) in Richtung Arbeitsposition (A) eine in einem vorgegebenen Abstand vor der Arbeitsposition (A) liegende Vor-Position (V) des Manipulators (6) erfasst wird, und dass von dieser Vor-Position (V) weg die Bewegung des Manipulators (6) bis zum Stillstand in der Arbeitsposition (A) in einer offenen Steuerung gesteuert wird.

2. Verfahren nach Anspruch 1, **dadurch gekennzeichnet, dass** bei der Steuerung der Bewegung des Manipulators (6) von der Vor-Position (V) zur Arbeitsposition (A) eine Reduktion der Antriebsleistung in Kombination mit einer Antriebsleistungs-Umkehr herbeigeführt wird.

3. Verfahren nach Anspruch 1 oder 2, **dadurch gekennzeichnet, dass** die Steuerung der Bewegung des Manipulators (6) von der Vor-Position (V) zur Arbeitsposition (A) unter Umsetzung einer vorgegebenen Steuerkurve mit einem positiven und einem negativen Antriebsleistungs-Bereich durchgeführt wird.

4. Verfahren nach Anspruch 3, **dadurch gekennzeichnet, dass** als Steuerkurve eine durch ein Polynom 3. oder 4. Grades definierte Kurve verwendet wird, dessen Koeffizienten vorab, z.B. empirisch bzw. durch lineare Regression, bestimmt werden.

5. Verfahren nach einem der Ansprüche 1 bis 4, **dadurch gekennzeichnet, dass** der Manipulator (6) rollend bewegt wird und die Steuerung seiner Bewegung von der Vor-Position (V) in die Arbeitsposition (A) als Drehmoment-Steuerung durchgeführt wird.

6. Verfahren nach Anspruch 5, **dadurch gekennzeichnet, dass** für die Rollen (12) des Manipulators (6) Schienenflächen mit PVDF-Laufflächen (13) vorgesehen werden, wobei für die Rollen (12) Rollflächen (12') mit PU oder Castamide vorgesehen werden.

7. Verfahren nach Anspruch 6, **dadurch gekennzeichnet, dass** die Laufflächen (13) zumindest im Bereich zwischen der Vor-Position (V) und der Arbeitsposition (A) auf eine Temperatur zwischen 60° C und 80°C, vorzugsweise 65°C bis 75°C, erhitzt werden.

8. Verfahren nach einem der Ansprüche 1 bis 7, **dadurch gekennzeichnet, dass** der Manipulator (6) die Vor-Position (V) mit einer vorgesehenen Geschwindigkeit durchläuft.

9. System zum Positionieren eines längs einer Führungsbahn verfahrbaren schweren, mit einem Antrieb (19) versehenen Manipulators (6) in einer Arbeitsposition (A), **dadurch gekennzeichnet, dass** an der Führungsbahn ein Positionsgeber (16) zur Festlegung einer in einem vorgegebenen Abstand von der Arbeitsposition befindlichen Vor-Position (V) vorgesehen ist, und dass dem Antrieb (16) des Manipulators (6) ein offener Steuerkreis (20) zum gesteuerten Abbremsen des Manipulators (6) von der Vor-Position (V) bis zum Stillstand in der Arbeitsposition (A) zugeordnet ist.

10. System nach Anspruch 9, **dadurch gekennzeichnet, dass** der Manipulator (6) Rollen (12) aufweist, die auf die Führungsbahn bildenden Schienenflächen (8) laufen, und dass zumindest einer der Rollen (12) ein Dreh-Antrieb (19) zugeordnet ist, dem der Steuerkreis (20) zugeordnet ist.

11. System nach Anspruch 10, **dadurch gekennzeichnet, dass** der Steuerkreis (20) zur Drehmoment-Steuerung einen Drehmoment-Umrichter (21) aufweist.

12. System nach Anspruch 11, **dadurch gekennzeichnet, dass** der Steuerkreis (20) einen Steuerkurven-Speicher (32) zur Speicherung einer vorgegebenen Steuerkurve für den DrehmomentVerlauf zwischen der Vor-Position (V) und der Arbeitsposition (A) aufweist.

13. System nach einem der Ansprüche 10 bis 12, **dadurch gekennzeichnet, dass** die Rollen (12) als Material zumindest für ihren Rollenmantel (12') PU oder Castamide und die Schienenflächen zumindest als Laufflächen (13) PVDF aufweisen.

14. System nach Anspruch 13, **dadurch gekennzeichnet, dass** den Schienenflächen zumindest im Bereich zwischen der Vor-Position (V) und der Arbeitsposition (A) eine Heizeinrichtung (27) zum Erhitzen der Laufflächen (13), insbesondere auf eine Temperatur zwischen 60°C und 80°C, vorzugsweise 65°C bis 75°C, zugeordnet ist.

FIG. 1

FIG. 2

FIG. 3

FIG. 4

FIG. 5

**FIG. 6**

**FIG. 7**

FIG. 8

FIG. 9A

FIG. 9B

FIG. 10

FIG. 11